# EUROPÄISCHE PATENTSCHRIFT

(11) **EP 3 444 134 B1**
(45) Veröffentlichungstag und Bekanntmachung des Hinweises auf die Patenterteilung: **17.06.2020**
(21) Anmeldenummer: 18187641.8
(22) Anmeldetag: 07.08.2018
(51) Int. Cl.: B60H 1/00, F01N 3/20, F01N 3/10, F01N 3/021, F01N 13/00, F01N 13/14

(54) **ABGASANLAGE**
EXHAUST GAS SYSTEM
INSTALLATION DE GAZ D'ÉCHAPPEMENT

(30) Priorität: 16.08.2017 DE 102017118680
(43) Veröffentlichungstag der Anmeldung: 20.02.2019
(73) Patentinhaber: Eberspächer Exhaust Technology GmbH & Co. KG, 66539 Neunkirchen (DE)
(72) Erfinder: Krüger, Jan, 73765 Neuhausen (DE); Eberspach, Günter, 72649 Wolfschlugen (DE)
(74) Vertreter: Ruttensperger Lachnit Trossin Gomoll

(56) Entgegenhaltungen:
- WO-A1-03/062005
- DE-A1- 4 208 621
- DE-A1- 10 211 115
- DE-A1-102010 029 262
- JP-A- H09 125 939

## Beschreibung

Die vorliegende Erfindung betrifft eine Abgasanlage für eine Brennkraftmaschine, die beispielsweise dazu eingesetzt werden kann, in einem Fahrzeug das in einer als Antriebsaggregat eingesetzten Brennkraftmaschine generierte Brennkraftmaschinenabgas zur Umgebung abzugeben.

Eine derartige Abgasanlage umfasst im Allgemeinen eine oder mehrere Katalysatoreinheiten. Beispielsweise kann eine in einer Brennkraftmaschinenabgas-Strömungsrichtung unmittelbar auf die Brennkraftmaschine folgende Katalysatoreinheit eine Oxidationskatalysatoranordnung sein, auf welche folgend beispielsweise eine Partikelfilteranordnung vorgesehen sein kann. Weiter stromabwärts kann eine SCR-(selektive katalytische Reduktion)-Katalysatoreinheit angeordnet sein. Da für eine effiziente katalytische Reaktion eine derartige Katalysatoreinheit, insbesondere eine eine Oxidationskatalysatoranordnung umfassende Katalysatoreinheit, eine bestimmte Mindesttemperatur von etwa 200 °C aufweisen sollte, besteht grundsätzlich das Problem, dass nach einer Inbetriebnahme oder Wiederinbetriebnahme der Brennkraftmaschine beispielsweise nach einem sogenannten Segelbetrieb eines Fahrzeugs eine vergleichsweise lange Zeitdauer vergehen kann, bis die Katalysatoranordnung diese Mindesttemperatur erreicht bzw. wieder erreicht.

Um diese Zeitdauer zu verkürzen, ist es beispielsweise möglich, die Katalysatoreinheit möglichst nahe an einer Brennkraftmaschine anzuordnen, um somit den Wärmeverlust von die Brennkraftmaschine verlassendem Brennkraftmaschinenabgas auf dem Strömungsweg zur Katalysatoreinheit möglichst gering zu halten. Dies ist jedoch aufgrund des zur Verfügung stehenden Bauraums in Fahrzeugen oft nur schwer zu realisieren. Weiter kann einer derartigen Katalysatoreinheit eine elektrische Heizung zugeordnet werden. Diese kann dann in Betrieb gesetzt werden, wenn die Katalysatoranordnung derselben eine zu geringe Temperatur aufweist. Der Betrieb einer derartigen elektrischen Heizung führt jedoch zu einer vergleichsweise starken Belastung des Bordspannungssystems. Weiter ist es bekannt, mit vergleichsweise hohem baulichen Aufwand die thermische Isolierung einer derartigen Abgasanlage zu verbessern, um somit durch verminderte Wärmeabgabe zur Umgebung hin eine möglichst schnelle Erwärmung einer Katalysatoranordnung zu gewährleisten. Neben dem hohen baulichen und damit auch verbundenen Kostenaufwand führt eine derartige thermische Isolierung zu dem Problem, dass ein längerer Betrieb einer Brennkraftmaschine in einem Hochlastzustand zu einer thermischen Überlastung einer Katalysatoreinheit führen kann. Eine derartige thermische Überlastung kann zur Folge haben, dass ein die Katalysatoranordnung tragendes Gehäuse der Katalysatoreinheit sich vergleichsweise stark ausdehnt, während eine beispielsweise mit Keramikmaterial aufgebaute und in dem Gehäuse unter Zwischenlagerung einer Fasermatte gehaltene Katalysatoranordnung sich nicht oder wesentlich weniger stark thermisch ausdehnt. Dies kann aufgrund verloren gegangener Einspannwirkung in dem Gehäuse zu einer Verlagerung der Katalysatoranordnung in Richtung stromabwärts zu einem trichterartig geformten Austrittsbereich für das Brennkraftmaschinenabgas führen. Kühlt sich das Gehäuse nachfolgend ab, kann dies zu einer übermäßigen radialen Belastung und einer Beschädigung der Katalysatoranordnung führen.

Aus der WO 03/06205 A1 ist eine Abgasanlage gemäß dem Oberbegriff des Anspruchs 1 bekannt. Diese für ein Fahrzeug mit Kryotank vorgesehene Abgasanlage umfasst ein Heizgerät, in welchem in einer Kryotank-Anlage entstehendes boil-off-Gas zusammen mit Luft verbrannt werden kann. Die bei der Verbrennung in dem Heizgerät entstehende Wärme wird durch Strahlungswärme auf die Wand der Abgasanlage und über diese auf eine Katalysatoranordnung übertragen.

Es ist die Aufgabe der vorliegenden Erfindung, eine hinsichtlich ihres thermischen Zustandes besser kontrollierbare Abgasanlage für eine Brennkraftmaschine, insbesondere in einem Fahrzeug, vorzusehen.

Erfindungsgemäß wird diese Aufgabe gelöst durch eine Abgasanlage für eine Brennkraftmaschine, insbesondere in einem Fahrzeug, gemäß Anspruch 1. Diese Abgasanlage umfasst wenigstens eine erste Katalysatoreinheit mit wenigstens einer von Brennkraftmaschinenabgas durchströmbaren Katalysatoranordnung und ein brennstoffbetriebenes Heizgerät, wobei die wenigstens eine erste Katalysatoreinheit ein von das Heizgerät verlassendem Heizgeräteabgas durchströmbares Wärmetauschervolumen umfasst.

Das Heizgerät umfasst:
- eine Verbrennungsluftförderanordnung zum Fördern von Verbrennungsluft in eine Brennkammer,
- eine Brennstoffförderanordnung zum Fördern von Brennstoff in die Brennkammer,
- eine von Heizgeräteabgas und zu erwärmendem Wärmetauschermedium durchströmbare Wärmetauscheranordnung.

Für eine sehr effiziente thermische Wechselwirkung des Heizgeräteabgases mit der wenigstens einen ersten Katalysatoreinheit umfasst die wenigstens eine erste Katalysatoreinheit einen von Brennkraftmaschinenabgas durchströmbaren Brennkraftmaschinenabgas-Strömungsraum, wobei die wenigstens eine Katalysatoranordnung in dem Brennkraftmaschinenabgas-Strömungsraum angeordnet ist. Das Wärmetauschervolumen umfasst einen den Brennkraftmaschinenabgas-Strömungsraum wenigstens bereichsweise umgebenden Heizgeräteabgas-Strömungsraum.

Durch ein brennstoffbetriebenes Heizgerät, das in einem Fahrzeug beispielsweise als Standheizung oder/und als Zuheizer betrieben werden kann, wird nach Inbetriebnahme eines derartigen Heizgerätes vergleichsweise schnell Abgas mit einer Temperatur im Bereich von etwa 200 °C ausgestoßen. Dieses Abgas wird erfindungsgemäß genutzt, um im Wärmetauschervolumen Wärme auf wenigstens eine Katalysatoranordnung zu übertragen und diese somit vergleichsweise schnell auf eine Temperatur zu bringen, welche die effiziente Durchführung einer katalytischen Reaktion gewährleistet. Somit kann beispielsweise in einem Zustand, in welchem ein derartiges Heizgerät vor Inbetriebnahme eines Fahrzeugs als Standheizung betrieben wird, um einen Fahrzeuginnenraum vorzuwärmen oder/und auch eine als Antriebsaggregat genutzte Brennkraftmaschine vorzuwärmen, das von diesem Heizgerät ausgestoßene Heizgeräteabgas zur thermischen Konditionierung wenigstens einer Katalysatoreinheit genutzt werden, um dann, wenn bei Inbetriebnahme eines Fahrzeugs die Brennkraftmaschine gestartet wird, auch bei zunächst noch vergleichsweise kaltem Brennkraftmaschinenabgas bereits die Durchführung einer katalytischen Reaktion zu gewährleisten. Auch bei der Wiederinbetriebnahme einer Brennkraftmaschine, beispielsweise nach einem länger andauernden Segelbetrieb eines Fahrzeugs, in welchem die Brennkraftmaschine abgeschaltet war und somit die Brennkraftmaschine und auch die Abgasanlage ausgekühlt sind, kann durch die Inbetriebnahme des Heizgeräts eine schnellere Erwärmung einer Katalysatoreinheit gewährleistet werden. Da der Brennkraftmaschinenabgasstrom und der Heizgeräteabgasstrom insbesondere im Bereich der thermisch zu konditionieren Katalysatoranordnung bzw. stromaufwärts derselben voneinander getrennt geführt werden, da das Heizgeräteabgas durch das von Brennkraftmaschinenabgas nicht durchströmbare Wärmetauschervolumen geleitet wird, hat ferner der Druck des Brennkraftmaschinenabgases in den dieses führenden Leitungen keine nachteilhafte Auswirkung auf den Betrieb des Heizgeräts.

Diese Prinzipien der vorliegenden Erfindung können Anwendung finden in einem Fahrzeug, das ausschließlich durch eine Brennkraftmaschine, also Diesel-Brennkraftmaschine oder Otto-Brennkraftmaschine, angetrieben wird. Ebenso kann die vorliegende Erfindung Anwendung finden bei einem mit einem Hybrid-Antriebssystem ausgestatteten Fahrzeug, bei welchem eine Brennkraftmaschine (Diesel oder Otto) sowie eine oder mehrere Elektromaschinen das erforderliche Antriebsdrehmoment bereitstellen.

Erfindungsgemäß kann vorgesehen sein, dass der Heizgeräteabgas-Strömungsraum wenigstens den die wenigstens eine Katalysatoranordnung enthaltenden Längenbereich des Brennkraftmaschinenabgas-Strömungsraums vorzugsweise über dessen gesamten Umfang umgibt.

Wenigstens eine Katalysatoranordnung der wenigstens einen ersten Katalysatoreinheit kann eine Oxidationskatalysatoranordnung sein.

Vor allem bei Einsatz in Verbindung mit einer Diesel-Brennkraftmaschine ist es vorteilhaft, wenn die wenigstens eine erste Katalysatoreinheit stromabwärts wenigstens einer Katalysatoranordnung derselben wenigstens eine Partikelfilteranordnung umfasst. Bei derartiger Ausgestaltung kann der Heizgeräteabgas-Strömungsraum den die wenigstens eine Partikelfilteranordnung enthaltenden Längenbereich des Brennkraftmaschinenabgas-Strömungsraums vorzugsweise über dessen gesamten Umfang umgeben.

Für eine weiter verbesserte Abgasreinigungswirkung wird vorgeschlagen, dass in einer Brennkraftmaschinenabgas-Strömungsrichtung stromabwärts der wenigstens einen ersten Katalysatoreinheit wenigstens eine zweite Katalysatoreinheit vorgesehen ist. Die wenigstens eine zweite Katalysatoreinheit kann eine SCR-Katalysatoreinheit sein.

Bei einer besonders vorteilhaften Weiterbildung einer erfindungsgemäßen Abgasanlage kann in einer Brennkraftmaschinenabgas-Strömungsrichtung stromabwärts der wenigstens einen ersten Katalysatoreinheit wenigstens eine Schalldämpfereinheit vorgesehen sein. Das Wärmetauschervolumen durchströmendes Heizgeräteabgas kann dabei in der Brennkraftmaschinenabgas-Strömungsrichtung stromaufwärts wenigstens einer Schalldämpfereinheit in den Brennkraftmaschinenabgasstrom eingeleitet werden. Somit kann auf das Vorsehen eines separaten Schalldämpfers für das Heizgerät verzichtet werden.

Wenn eine Mehrzahl von in einer Brennkraftmaschinenabgas-Strömungsrichtung aufeinanderfolgenden Schalldämpfereinheiten vorgesehen ist, wird bei einer besonders bevorzugten Ausgestaltung das Heizgeräteabgas zwischen einer in der Brennkraftmaschinenabgas-Strömungsrichtung letzten und einer in der Brennkraftmaschinenabgas-Strömungsrichtung vorletzten Schalldämpfereinheit in den Brennkraftmaschinenabgasstrom eingeleitet. Somit ist gewährleistet, dass das Heizgeräteabgas in einem Bereich in die Abgasanlage bzw. einen das Brennkraftmaschinenabgas führenden Leitungsbereich derselben eingeleitet wird, in welchem der Druck des Brennkraftmaschinenabgases bereits deutlich gemindert ist, so dass eine nachteilhafte Auswirkung auf den Verbrennungsbetrieb des Heizgeräts nicht entsteht. Gleichwohl kann in einem Zustand, in dem das Heizgerät nicht betrieben wird, durch die vermittels des Brennkraftmaschinenabgasstroms generierte Sogwirkung Luft durch das Heizgerät und somit auch das Wärmetauschervolumen hindurch gesaugt werden, so dass einer Überhitzung der wenigstens einen ersten Katalysatoreinheit entgegengewirkt werden kann.

Um auch im Bereich des Heizgeräts einen übermäßigen Schadstoffanteil im Abgas zu vermeiden, wird vorgeschlagen, dass eine von Heizgeräteabgas durchströmbare Heizgeräteabgas-Katalysatoranordnung vorgesehen ist. Eine derartige Heizgeräteabgas-Katalysatoranordnung, die beispielsweise ebenfalls als Oxidationskatalysator ausgebildet sein kann, bietet weiter den Vorteil, dass sie aufgrund der dort ablaufenden exothermen Reaktion beim Betreiben des Heizgeräts mit Brennstoffüberschuss, also in einem unterstöchiometrischen Betriebszustand, durch die Umsetzung von nicht verbranntem Kohlenwasserstoff und die dabei entstehende Wärme eine zusätzliche Erwärmung von die Heizgeräteabgas-Katalysatoranordnung durchströmendem Heizgeräteabgas bewirkt. Dieser Effekt kann genutzt werden, um die Heizgeräteabgastemperatur auf einen Wert von deutlich über 200 °C anzuheben und somit die wenigstens eine erste Katalysatoreinheit noch schneller zu erwärmen.

Um diesen Effekt möglichst effizient zu gestalten, wird weiter vorgeschlagen, dass die Heizgeräteabgas-Katalysatoranordnung in einer Heizgeräteabgas-Strömungsrichtung im Wesentlichen stromabwärts der Wärmetauscheranordnung angeordnet ist. Somit ist gewährleistet, dass bei der katalytischen Reaktion in der Heizgeräteabgas-Katalysatoranordnung entstehende Wärme nicht in der Wärmetauscheranordnung auf das diese durchströmende Wärmeträgermedium übertragen wird, sondern im Wesentlichen durch das Heizgeräteabgas in Richtung zur wenigstens einen ersten Katalysatoreinheit transportiert wird.

Die Erfindung betrifft ferner ein Verfahren zum Betreiben einer erfindungsgemäß aufgebauten Abgasanlage für eine Brennkraftmaschine, wobei das Heizgerät in einem Katalysatoreinheit-Temperierbetrieb wenigstens dann in einem Verbrennungsbetrieb zum Erzeugen von das Wärmetauschervolumen durchströmendem Heizgeräteabgas betrieben wird, wenn die Temperatur im Bereich der wenigstens einen ersten Katalysatoreinheit unter einer ersten Schwellentemperatur liegt. Diese erste Schwellentemperatur kann beispielsweise in einem Bereich von 150°C bis 200°C liegen.

Um insbesondere unter Ausnutzung einer dem Heizgerät zugeordneten Heizgeräteabgas-Katalysatoranordnung die Temperatur des Heizgeräteabgases weiter erhöhen zu können, wird vorgeschlagen, dass das Heizgerät im Verbrennungsbetrieb wenigstens zeitweise mit einem unterstöchiometrischen Brennstoff/Verbrennungsluft-Gemisch betrieben wird.

Um dabei den für die Reaktion an der Heizgeräteabgas-Katalysatoranordnung erforderlichen Sauerstoff zur Verfügung zu stellen, kann das Heizgerät alternierend mit einem unterstöchiometrischen Brennstoff/Verbrennungsluft-Gemisch und einem überstöchiometrischen Brennstoff/Verbrennungsluft-Gemisch betrieben werden.

Bei einer alternativen Vorgehensweise zur Bereitstellung von Reaktionswärme an der Heizgeräteabgas-Katalysatoranordnung wird vorgeschlagen, dass das Heizgerät wenigstens zeitweise bei beendeter Verbrennung mit einem überstöchiometrischen Brennstoff/Verbrennungsluft-Gemisch betrieben wird.

Ferner kann bei dem erfindungsgemäßen Verfahren vorgesehen sein, dass das Heizgerät in einem Katalysatoreinheit-Temperierbetrieb wenigstens dann in einem Luftförderbetrieb zum Erzeugen eines das Wärmetauschervolumen durchströmendem Luftstroms betrieben wird, wenn die Temperatur im Bereich der wenigstens einen ersten Katalysatoreinheit über einer zweiten Schwellentemperatur liegt. Durch das Fördern von Luft durch das nicht im Verbrennungsbetrieb betriebene Heizgerät, welche Luft dann auch das Wärmetauschervolumen der wenigstens einen ersten Katalysatoreinheit durchströmt, kann insbesondere dann, wenn die Gefahr einer thermischen Überlastung dieser Katalysatoreinheit besteht, Wärme abgetragen und nach außen abgegeben werden. Die zweite Schwellentemperatur kann in einem Bereich von 500°C bis 600°C liegen.

Es ist darauf hinzuweisen, dass die mit derartigen Schwellentemperaturen zu vergleichenden Temperaturwerte in verschiedener Weise generiert werden. So können den thermisch zu überwachenden Systembereichen, wie zum Beispiel einer Katalysatoranordnung, einem Partikelfilter oder einem eine Katalysatoranordnung bzw. einen Partikelfilter enthaltenden Gehäuse, Temperatursensoren zugeordnet werden, um unmittelbar die Temperatur dieser hinsichtlich ihrer Temperatur zu überwachenden Systembereiche zu erfassen. Auch kann die Temperatur des die Brennkraftmaschine verlassenden Brennkraftmaschinenabgases beispielsweise unmittelbar vor oder unmittelbar nach einer Katalysatoranordnung erfasst werden und beruhend auf dieser Temperatur beispielsweise auf die Temperatur einer Katalysatoranordnung oder/und die Temperatur eines die Katalysatoranordnung enthaltenden bzw. tragenden Gehäuses geschlossen werden. Auch kann mit Rechenmodellen beispielsweise unter Berücksichtigung des Lastzustandes einer Brennkraftmaschine und des thermischen Verhaltens einer Abgasanlage auf die im Bereich einer Katalysatoreinheit, insbesondere einer Katalysatoranordnung bzw. eines Gehäuses derselben, vorliegenden Temperaturen geschlossen werden.

Die Erfindung betrifft ferner ein Antriebssystem für ein Fahrzeug mit einer Brennkraftmaschine und einer erfindungsgemäß aufgebauten Abgasanlage für die Brennkraftmaschine, wobei diese Abgasanlage vorzugsweise mit einem erfindungsgemäßen Verfahren betrieben werden kann.

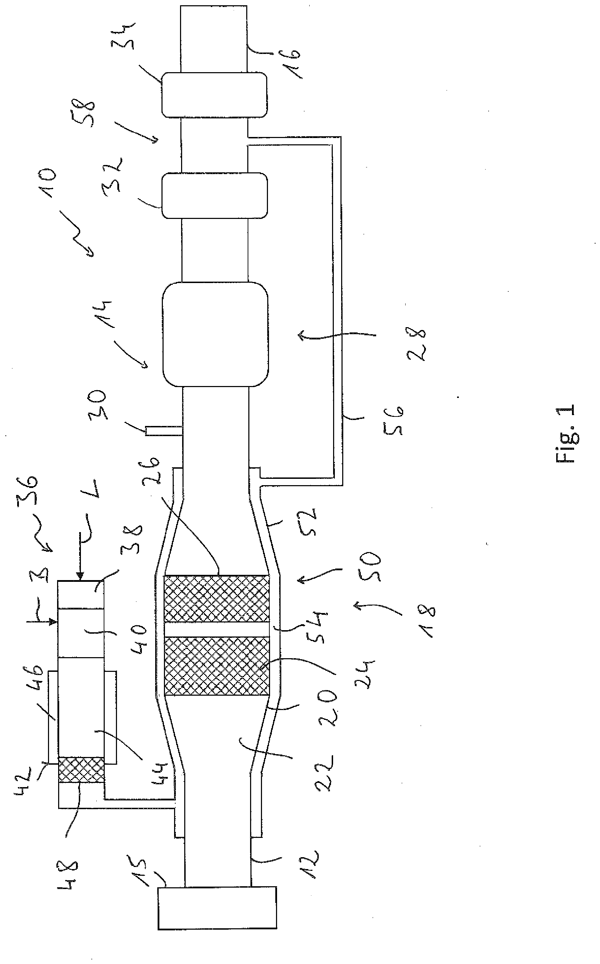

Die vorliegende Erfindung wird nachfolgend anhand der beiliegenden Fig. 1 detailliert beschrieben, welche in prinzipieller Darstellung eine erfindungsgemäß aufgebaute Abgasanlage zeigt.

Die Fig. 1 zeigt in prinzipieller Darstellung eine allgemein mit 10 bezeichnete Abgasanlage für eine Brennkraftmaschine, beispielsweise in einem Kraftfahrzeug. Die Abgasanlage 10 ist mit einem stromaufwärtigen Endbereich 12 einer eine Mehrzahl von Abgasrohren umfassenden Abgasleitung 14 zur Anbindung an eine Brennkraftmaschine 15, beispielsweise einen Auslasskrümmer derselben, ausgebildet. In einem stromabwärtigen Endbereich 16 verlässt das von der Brennkraftmaschine 15 ausgestoßene Brennkraftmaschinenabgas nach Durchströmen der Abgasanlage 10 die Abgasanlage 10 zur Umgebung hin. Es ist hier darauf hinzuweisen, dass selbstverständlich die Abgasanlage 10 nicht notwendigerweise den in Fig. 1 erkennbaren linear gestreckten Aufbau aufweisen muss. Angepasst an die Struktur eines Fahrzeugs kann die Abgasanlage 10 auch einen oder mehrere Krümmungsbereiche aufweisen.

Beispielsweise folgend auf den stromaufwärtigen Endbereich 12, kann die Abgasanlage 10 eine erste Katalysatoreinheit 18 umfassen. Die erste Katalysatoreinheit 18 umfasst in einem Gehäuse 20 einen Brennkraftmaschinenabgas-Strömungsraum 22, in welchem die Brennkraftmaschine 15 verlassendes Brennkraftmaschinenabgas in Richtung auf eine allgemein mit 24 bezeichnete Katalysatoranordnung zu strömt. Die Katalysatoranordnung 24 kann beispielsweise eine Oxidationskatalysatoranordnung sein, die mit einem z.B. monolithisch aufgebauten Keramikblock und einer diesen umgebenden Fasermatte durch Presspassung im Gehäuse 20 der Katalysatoreinheit 18 gehalten ist. Der Keramikblock kann mit Katalysatormaterial beschichtet oder/und durchsetzt sein.

Stromabwärts der Katalysatoranordnung 24 kann in dem Brennkraftmaschinenabgas-Strömungsraum im Gehäuse 20 eine Partikelfilteranordnung 26 angeordnet sein.

Stromabwärts der ersten Katalysatoreinheit 18 kann eine zweite Katalysatoreinheit 28 vorgesehen sein. Diese kann als so genannte SCR-Katalysatoreinheit ausgebildet sein. Durch einen stromaufwärts der zweiten Katalysatoreinheit 28 angeordneten Injektor 30 kann ein Reaktionsmittel, beispielsweise eine Harnstoff/Wasser-Lösung, dem Brennkraftmaschineabgas beigesetzt werden, so dass in einer in der zweiten Katalysatoreinheit 18 ablaufenden katalytischen Reaktion der Stickoxidanteil im Brennkraftmaschinenabgas gesenkt wird.

Stromabwärts der zweiten Katalysatoreinheit 28 kann eine beispielsweise als MittelSchalldämpfer zu bezeichnende erste Schalldämpfereinheit 32 vorgesehen sein. Stromabwärts der ersten Schalldämpfereinheit 32 kann eine als Nachschalldämpfer oder Endschalldämpfer zu bezeichnende zweite Schalldämpfereinheit 34 angeordnet sein.

Die Abgasanlage 10 umfasst ferner ein allgemein mit 36 bezeichnetes brennstoffbetriebenes Heizgerät. Das Heizgerät 36 kann in einem Fahrzeug auch als Standheizung oder/und als Zuheizer eingesetzt werden, einerseits um beispielsweise vor Inbetriebnahme eines Fahrzeugs einen Fahrzeuginnenraum bzw. die Brennkraftmaschine 15 thermisch zu konditionieren, andererseits um auch im Betrieb der Brennkraftmaschine 15 zusätzlich Wärme bereitzustellen, sofern dies für eine ausreichende Erwärmung eines Fahrzeuginnenraums erforderlich ist.

Vermittels eines zur Zufuhr einer für einen jeweiligen Betrieb erforderlichen Luftmenge ansteuerbaren Verbrennungsluftgebläses 38, beispielsweise Seitenkanalgebläse, wird Verbrennungsluft L in eine Brennkammer 40 des Heizgeräts 36 gefördert. Vermittels einer durch einen Strömungspfeil für Brennstoff B dargestellten, zur Zufuhr einer für einen jeweiligen Betrieb erforderlichen Brennstoffmenge ansteuerbaren Brennstoffförderanordnung, beispielsweise Dosierpumpe, wird im Allgemeinen flüssiger Brennstoff in die Brennkammer 40 eingeleitet. Bei Ausgestaltung als Verdampferbrenner kann ein poröses Verdampfermedium den flüssigen Brennstoff aufnehmen und in Dampfform in die Brennkammer 40 abgeben, wo der Brennstoffdampf sich mit Verbrennungsluft L durchmischt. Bei in der Brennkammer 40 ablaufender Verbrennung entsteht Heizgeräteabgas, welches stromabwärts der Brennkammer 40 eine allgemein mit 42 bezeichnete Wärmetauscheranordnung in einem Wärmetauscherströmungsraum 44 durchströmt. Ein Wärmeträgermediumströmungsraum 46 wird von zu erwärmendem Wärmeträgermedium, beispielsweise einer Flüssigkeit, durchströmt. Das den Wärmetauscherströmungsraum 44 durchströmende Heizgeräteabgas überträgt dabei Wärme auf das im Wärmeträgermediumströmungsraum 46 strömende Wärmeträgermedium, so dass dieses in der Wärmetauscheranordnung 42 erwärmt wird.

In einem im Wesentlichen stromabwärts der thermischen Wechselwirkung des Heizgeräteabgases mit dem Wärmeträgermedium positionierten Bereich des Wärmetauscherströmungsraums 44 ist eine Heizgeräteabgas-Katalysatoranordnung 48, beispielsweise ebenfalls eine Oxidationskatalysatoranordnung, vorgesehen. Das Heizgeräteabgas verlässt mit vermindertem Schadstoffanteil das Heizgerät 36 stromabwärts der Heizgeräteabgas-Katalysatoranordnung 48.

In Zuordnung zur ersten Katalysatoreinheit 18 ist, das Gehäuse 20 derselben umgebend oder in dieses integriert, ein allgemein mit 50 bezeichnetes Wärmetauschervolumen vorgesehen. Das Wärmetauschervolumen 50 ist beispielsweise nach innen, also in Richtung zum Brennkraftmaschinenabgas-Strömungsraum 22, durch das Gehäuse 20 der ersten Katalysatoreinheit 18 abgeschlossen und ist nach außen durch eine das Gehäuse 20 umgebende Wandung 52 abgeschlossen, so dass zwischen dem Gehäuse 20 und der Wandung 52 ein den Brennkraftmaschinenabgas-Strömungsraum 22 im Wesentlichen über die gesamte Länge der ersten Katalysatoreinheit 18 und über den gesamten Umfang des Gehäuses 20 umgebender Heizgeräteabgas-Strömungsraum 54 gebildet ist. Das Heizgerät 36 verlassendes Heizgeräteabgas tritt in einen stromaufwärtigen Endbereich des Heizgeräteabgas-Strömungsraums 54 ein, strömt entlang der Außenseite des Gehäuses 20, vorzugsweise über den gesamten Umfang desselben verteilt, in Richtung zu einem stromabwärtigen Endbereich des Heizgeräteabgas-Strömungsraums 54 und verlässt diesen dort über eine Heizgeräteabgas-Leitung 56. Über die Heizgeräteabgas-Leitung 56 strömt das den Heizgeräteabgas-Strömungsraum 54 verlassende Heizgeräteabgas zu einem Bereich 58 der Abgasleitung 14, der in einer Brennkraftmaschinenabgas-Strömungsrichtung zwischen der ersten Schalldämpfereinheit 32 und der zweiten Schalldämpfereinheit 34 liegt.

Wird das Heizgerät 36 im Verbrennungsbetrieb betrieben, wird im Allgemeinen nur ein Teil der im Heizgeräteabgas transportierten Wärme auf das den Wärmeträgermediumströmungsraum 46 durchströmende Wärmeträgermedium übertragen. Das Heizgeräteabgas verlässt den Wärmetauscherströmungsraum 44 bzw. das Heizgerät 10 im Allgemeinen mit einer Temperatur im Bereich von etwa 200 °C. Dieses vergleichsweise heiße Heizgeräteabgas umströmt das Gehäuse 20 der ersten Katalysatoreinheit 18 und somit auch die darin aufgenommene Katalysatoranordnung 24 bzw. auch die Partikelfilteranordnung 26. Dabei wird die erste Katalysatoreinheit 18 erwärmt und thermisch derart konditioniert, dass bei Inbetriebnahme der Brennkraftmaschine 15 ohne wesentliche zeitliche Verzögerung die katalytische Reaktion einsetzen und somit der Schadstoffanteil, insbesondere der CO-Anteil, gesenkt werden kann. Wurde bereits vor oder mit Inbetriebnahme des Heizgeräts 36 die Brennkraftmaschine 15 in Betrieb gesetzt, wird durch das zusätzliche Betreiben des Heizgeräts 36 die Zeitdauer, bis zu welcher die Katalysatoranordnung 24 ihre Betriebstemperatur erreicht, deutlich gesenkt, so dass die Zeitdauer, während welcher eine effiziente Schadstoffminderung in der ersten Katalysatoreinheit 18 nicht stattfinden wird, deutlich verkürzt ist.

Um die Temperatur des das Heizgerät 36 verlassenden Heizgeräteabgases weiter zu erhöhen, kann das Heizgerät 36 im Verbrennungsbetrieb unterstöchiometrisch, also mit einem fetten Gemisch aus Brennstoff B und Verbrennungsluft L betrieben werden. Der aufgrund des Sauerstoffmangels nicht verbrannte Anteil an Brennstoff bzw. Kohlenwasserstoff strömt durch den Wärmetauscherströmungsraum 44 hindurch und wird an der Heizgeräteabgas-Katalysatoranordnung 48 in einer exothermen Reaktion zu Kohlendioxid und Wasser umgesetzt.

Im unterstöchiometrischen Verbrennungsbetrieb strömt ein im Wesentlichen sauerstofffreies Gemisch aus unverbranntem Brennstoff und Verbrennungsabgas zu der Heizgeräteabgas-Katalysatoranordnung 48. Der darin enthaltene Brennstoff wird in der auch als Brennstoffspeicher wirksamen Heizgeräteabgas-Katalysatoranordnung 48 zwischengespeichert. In einer dann folgenden Phase mit überstöchiometrischem Verbrennungsbetrieb wird der überschüssige Sauerstoff mit dem zwischengespeicherten Brennstoff an der Heizgeräteabgas-Katalysatoranordnung 48 umgesetzt und die dabei entstehende Wärme auf das zum Wärmetauschervolumen 50 strömende Abgas übertragen.

Es kann somit bei alternierendem überstöchiometrischem Verbrennungsbetrieb und unterstöchiometrischem Verbrennungsbetrieb dafür gesorgt werden, dass ein Teil des Brennstoffs erst in der Heizgeräteabgas-Katalysatoranordnung 48 reagiert und die dabei freigesetzte Wärme zumindest größtenteils für die Erwärmung der Katalysatoreinheit 18 genutzt werden kann.

Bei einer alternativen Vorgehensweise kann beispielsweise dann, wenn für die Erwärmung eines Fahrzeuginnenraums nur eine geringe Wärmemenge erforderlich ist, durch Erhöhen der Verbrennungsluftmenge oder/und Verringern der Brennstoffmenge die Verbrennung in der Brennkammer 40 beendet werden und ein überstöchiometrisches Gemisch aus Luft und Brennstoff zu der Heizgeräteabgas-Katalysatoranordnung 48 geleitet werden. Dieses Gemisch zündet und reagiert an der dann heißen Heizgeräteabgas-Katalysatoranordnung 48. Die dabei freigesetzte Wärme wird nur zu einem geringen Anteil auf das im Wärmeträgermediumströmungsraum 46 strömende Wärmeträgermedium übertragen, kann größtenteils jedoch im Wärmetauschervolumen 50 zur Erwärmung der Katalysatoreinheit 18 genutzt werden.

Durch die dabei freigesetzte Wärme wird die Heizgeräteabgas-Katalysatoranordnung 48 zusätzlich erwärmt, wobei zumindest ein Teil dieser Wärme durch das diese umströmende bzw. durchströmende Heizgeräteabgas aufgenommen wird. Dadurch kann bei im Heizgerät 36 ablaufender Verbrennung durch den Brennstoffüberschuss und die katalytische Umsetzung im Bereich der Heizgeräteabgas-Katalysatoranordnung 48 die Temperatur des das Heizgerät 36 verlassenden Heizgeräteabgases auf deutlich über 200°C, z.B. bis in einen Bereich von etwa 300°C, angehoben werden. Somit kann auch die erste Katalysatoreinheit 18 deutlich schneller erwärmt werden.

Die Temperatur des das Heizgerät 36 verlassenden Heizgeräteabgases kann auch maßgeblich dadurch beeinflusst werden, in welchem Ausmaß das den Wärmeträgermediumströmungsraum 46 durchströmende Wärmeträgermedium Wärme aufnehmen kann. Soll dies weitestgehend verhindert werden, soll also ein wesentlicher Teil der bei der Verbrennung entstehenden und im Heizgeräteabgas transportierten Wärme zur Erwärmung der ersten Katalysatoreinheit 18 zur Verfügung gestellt werden, kann beispielsweise eine Zirkulation von Wärmeträgermedium durch den Wärmeträgermediumströmungsraum 46 weitestgehend unterbunden werden oder so stark gedrosselt werden, dass sichergestellt ist, dass eine Überhitzung des Heizgeräts 36 verhindert wird, eine wesentliche Wärmeabfuhr über das Wärmeträgermedium jedoch nicht erfolgt. Dabei kann beispielsweise auch die Heizleistung des Heizgeräts 36 so eingestellt werden, dass eine Überhitzung desselben vermieden wird.

Wie bereits erläutert, wird das Heizgeräteabgas nach Durchströmen des Heizgeräteabgas-Strömungsraums 54 in einem Bereich in die Abgasleitung 14 eingeleitet, der nahe deren stromabwärtigem Endbereich 16, in der Brennkraftmaschinenabgas-Strömungsrichtung jedoch noch stromaufwärts der letzten Schalldämpfereinheit, also der zweiten Schalldämpfereinheit 36 liegt. Somit wird auch eine effiziente Dämpfung der im Verbrennungsbetrieb im Heizgerät 36 entstehenden und über das Heizgeräteabgas transportierten Geräusche gewährleistet, ohne dass für das Heizgerät 36 ein zusätzlicher bzw. separater Schalldämpfer bereitgestellt werden muss. Andererseits erfolgt damit die Einleitung des Heizgeräteabgases in einem vergleichsweise weit stromabwärts liegenden Bereich der Abgasleitung 14, wo der vorherrschende Brennkraftmaschinenabgasdruck vergleichsweise gering ist. In diesem Bereich kann aufgrund der durch die Brennkraftmaschinenabgasströmung entstehenden Sogwirkung die Einleitung von Heizgeräteabgas unterstützt werden.

Dieser Effekt kann insbesondere auch dann genutzt werden, wenn das Heizgerät 36 nicht im Heizbetrieb betrieben wird, in der Brennkammer 40 also keine Verbrennung abläuft. Dies ist ein Zustand, in welchem beispielsweise aufgrund einer oder mehrerer der ersten Katalysatoreinheit 18 zugeordneten Sensoreinheiten oder/und durch Berechnung festgestellt wurde, dass beispielsweise die Katalysatoranordnung 24 eine ausreichend hohe Temperatur aufweist, so dass ein zusätzlicher Wärmeeintrag durch das Gehäuse 20 umströmendes Heizgeräteabgas nicht erforderlich ist. Aufgrund der vorangehend angesprochenen Sogwirkung in demjenigen Bereich, in welchem die Heizgeräteabgas-Leitung 56 zur Abgasleitung 14 offen ist, wird Luft durch das Heizgerät 36 und auch den Heizgeräteabgas-Strömungsraum 54 hindurchgesaugt, so dass grundsätzlich Wärme aus dem Bereich der ersten Katalysatoreinheit 18 abgeführt werden kann. Dies gewährleistet insbesondere dann, wenn die Brennkraftmaschine über längere Zeitdauer hinweg in einem Zustand hoher Last betrieben wird, dass eine Überhitzung der ersten Katalysatoreinheit 18 vermieden werden kann. Um diesen Effekt noch weiter zu unterstützen, kann das Heizgerät 36 auch so betrieben werden, dass bei abgeschalteter Brennstoffzufuhr nur die Verbrennungsluftförderanordnung 38, also beispielsweise ein Seitenkanalgebläse betrieben wird, um Luft durch das Heizgerät 36 hindurch und in den Heizgeräteabgas-Strömungsraum 54 zu fördern. Es kann somit aktiv für einen vergleichsweise starken Luftstrom gesorgt werden, der zur Abfuhr von Wärme aus der ersten Katalysatoreinheit beiträgt. Die Stärke dieses Luftstroms kann beispielsweise durch Einstellung der Drehzahl eines Förderrads der Verbrennungsluftförderanordnung 38 beeinflusst werden.

Durch die erfindungsgemäße Ausgestaltung einer Abgasanlage für eine Brennkraftmaschine wird es möglich, eine Katalysatoreinheit schneller und im Wesentlichen auch unabhängig vom Betrieb einer Brennkraftmaschine auf die für die Durchführung einer effizienten katalytischen Reaktion erforderliche Temperatur zu bringen. Da die hierfür erforderliche Wärme durch ein brennstoffbetriebenes Heizgerät bereitgestellt wird, kann eine übermäßige Belastung eines Bordspannungssystems vermieden werden und somit auch eine größere Reichweite eines Hybridfahrzeugs im elektrischen Fahrbetrieb gewährleistet werden. Da in modernen Kraftfahrzeugen im Allgemeinen eine Standheizung oder ein Zuheizer verbaut ist, ist es lediglich erforderlich, deren bzw. dessen Abgasführung anzupassen. Auch kann der bei einem derartigen brennstoffbetriebenen Fahrzeugheizgerät im Allgemeinen vorzusehende Schalldämpfer entfallen, da dessen Funktion eine Schalldämpfereinheit der Abgasanlage übernehmen kann. Da in einer derartigen Schalldämpfereinheit im Allgemeinen auch zumindest geringe Mengen an Flüssigkeit zwischengespeichert werden können, kann somit auch ein Abtropfen von Kondensat aus dem Bereich der das Heizgeräteabgas führenden Leitungen vermieden werden.

Es ist abschließend darauf hinzuweisen, dass selbstverständlich die Prinzipien der vorliegenden Erfindung auch Anwendung finden können, wenn die Abgasanlage 10, beispielsweise auch das Heizgerät 36 derselben, anders konfiguriert ist, als dargestellt. So könnte beispielsweise das Heizgerät 36 auch ein Luftheizgerät sein, mit welchem die in einen Fahrzeuginnenraum einzuleitende Luft als Wärmeträgermedium direkt erwärmt wird. Auch ist es selbstverständlich, dass der Aufbau des Heizgeräts 36 in Fig. 1 nur prinzipiell und schematisch dargestellt ist. Das die Brennkammer 40 verlassende Heizgeräteabgas kann beispielsweise nach Durchströmen eines Flammrohrs zunächst um etwa 180° umgelenkt werden, um dann einen an der Außenseite des Flammrohrs entlanggeführten Wärmetauscherströmungsraum 44 in Richtung auf die Brennkammer 40 zu zu durchströmen und dabei Wärme auf das Wärmeträgermedium zu übertragen. Auch könnte, abhängig von den thermischen Anforderungen, die Heizgeräteabgas-Katalysatoranordnung 48 weiter stromaufwärts, also weiter im Bereich der thermischen Wechselwirkung mit dem Wärmeträgermedium angeordnet sein, um die durch die Heizgeräteabgas-Katalysatoranordnung 48 im unterstöchiometrischen Betrieb zusätzlich generierte Wärme auch bzw. verstärkt für die Erwärmung des Wärmeträgermediums nutzen zu können.

Auch ist darauf hinzuweisen, dass in einer derartigen Abgasanlage 10 auch mehrere erste, also durch das Heizgeräteabgas zu erwärmende Katalysatoreinheiten 18 oder/und mehrere zweite, also durch das Heizgeräteabgas nicht zusätzlich zu erwärmende Katalysatoreinheiten 28 vorgesehen sein können. Auch könnte zumindest eine derartige erste Katalysatoreinheit 18 beispielsweise als SCR-Katalysatoreinheit ausgebildet sein. Ferner kann zum Vermeiden thermischer Verluste die Abgasanlage 10 insbesondere in den thermisch kritischen Bereichen, wie zum Beispiel im Bereich der Katalysatoreinheiten, durch Umgeben mit Isolationsmaterial thermisch isoliert sein.

## Patentansprüche

1. Abgasanlage für eine Brennkraftmaschine, insbesondere in einem Fahrzeug, umfassend wenigstens eine erste Katalysatoreinheit (18) mit wenigstens einer von Brennkraftmaschinenabgas durchströmbaren Katalysatoranordnung (24) und ein brennstoffbetriebenes Heizgerät (36) mit einer Verbrennungsluftförderanordnung (38) zum Fördern von Verbrennungsluft (L) in eine Brennkammer (40) und einer Brennstoffförderanordnung zum Fördern von Brennstoff (B) in die Brennkammer (40), wobei die wenigstens eine erste Katalysatoreinheit (18) einen von Brennkraftmaschinenabgas durchströmbaren Brennkraftmaschinenabgas-Strömungsraum (22) umfasst, wobei die wenigstens eine Katalysatoranordnung (24) in dem Brennkraftmaschinenabgas-Strömungsraum (22) angeordnet ist,
**dadurch gekennzeichnet,**
**dass** das Heizgerät (36) eine von Heizgeräteabgas und zu erwärmendem Wärmetauschermedium durchströmbare Wärmetauscheranordnung (42) umfasst, und
**dass** die wenigstens eine erste Katalysatoreinheit (18) ein von das Heizgerät (36) verlassendem Heizgeräteabgas durchströmbares Wärmetauschervolumen (50) mit einem den Brennkraftmaschinenabgas-Strömungsraum (22) wenigstens bereichsweise umgebenden Heizgeräteabgas-Strömungsraum (54) umfasst.

2. Abgasanlage nach Anspruch 1, **dadurch gekennzeichnet, dass** der Heizgeräteabgas-Strömungsraum (54) wenigstens den die wenigstens eine Katalysatoranordnung (24) enthaltenden Längenbereich des Brennkraftmaschinenabgas-Strömungsraums (22) vorzugsweise über dessen gesamten Umfang umgibt.

3. Abgasanlage nach einen der vorangehenden Ansprüche, **dadurch gekennzeichnet, dass** wenigstens eine Katalysatoranordnung (24) der wenigstens einen ersten Katalysatoreinheit (18) eine Oxidationskatalysatoranordnung ist.

4. Abgasanlage nach einem der vorangehenden Ansprüche, **dadurch gekennzeichnet, dass** die wenigstens eine erste Katalysatoreinheit (18) stromabwärts von wenigstens einer Katalysatoranordnung (24) derselben wenigstens eine Partikelfilteranordnung (26) umfasst.

5. Abgasanlage nach Anspruch 2 und Anspruch 4, **dadurch gekennzeichnet, dass** der Heizgeräteabgas-Strömungsraum (54) den die wenigstens eine Partikelfilteranordnung (26) enthaltenden Längenbereich des Brennkraftmaschinenabgas-Strömungsraums (22) vorzugsweise über dessen gesamten Umfang umgibt.

6. Abgasanlage nach einem der vorangehenden Ansprüche, **dadurch gekennzeichnet, dass** in einer Brennkraftmaschinenabgas-Strömungsrichtung stromabwärts der wenigstens einen ersten Katalysatoreinheit (18) wenigstens eine zweite Katalysatoreinheit (28) vorgesehen ist, vorzugsweise wobei die wenigstens eine zweite Katalysatoreinheit (28) eine SCR-Katalysatoreinheit ist.

7. Abgasanlage nach einem der vorangehenden Ansprüche, **dadurch gekennzeichnet, dass** in einer Brennkraftmaschinenabgas-Strömungsrichtung stromabwärts der wenigstens einen ersten Katalysatoreinheit (18) wenigstens eine Schalldämpfereinheit (32, 34) vorgesehen ist, und dass das Wärmetauschervolumen (50) durchströmendes Heizgeräteabgas in der Brennkraftmaschinenabgas-Strömungsrichtung stromaufwärts wenigstens einer Schalldämpfereinheit (34) in den Brennkraftmaschinenabgasstrom eingeleitet wird.

8. Abgasanlage nach Anspruch 7, **dadurch gekennzeichnet, dass** eine Mehrzahl von in einer Brennkraftmaschinenabgas-Strömungsrichtung aufeinanderfolgenden Schalldämpfereinheiten (32, 34) vorgesehen ist, und dass das Heizgeräteabgas zwischen einer in der Brennkraftmaschinenabgas-Strömungsrichtung letzten und einer in der Brennkraftmaschinenabgas-Strömungsrichtung vorletzten Schalldämpfereinheit (32, 34) in den Brennkraftmaschinenabgas Strom eingeleitet wird.

9. Abgasanlage nach einem der vorangehenden Ansprüche, **dadurch gekennzeichnet, dass** eine von Heizgeräteabgas durchströmbare Heizgeräteabgas-Katalysatoranordnung (48) vorgesehen ist

10. Abgasanlage nach Anspruch 9, **dadurch gekennzeichnet, dass** die Heizgeräteabgas-Katalysatoranordnung (48) in einer Heizgeräteabgas-Strömungsrichtung im Wesentlichen stromabwärts der Wärmetauscheranordnung (42) angeordnet ist.

11. Verfahren zum Betreiben einer Abgasanlage (10) nach einem der vorangehenden Ansprüche, wobei das Heizgerät (36) in einem Katalysatoreinheit-Temperierbetrieb wenigstens dann in einem Verbrennungsbetrieb zum Erzeugen von das Wärmetauschervolumen durchströmendem Heizgeräteabgas betrieben wird, wenn die Temperatur im Bereich der wenigstens einen ersten Katalysatoreinheit (18) unter einer ersten Schwellentemperatur liegt.

12. Verfahren nach Anspruch 11, sofern auf Anspruch 9 oder 10 rückbezogen, **dadurch gekennzeichnet, dass** das Heizgerät (36) im Verbrennungsbetrieb wenigstens zeitweise mit einem unterstöchiometrischen Brennstoff/Verbrennungsluft-Gemisch betrieben wird.

13. Verfahren nach Anspruch 12, **dadurch gekennzeichnet, dass** das Heizgerät (36) alternierend mit einem unterstöchiometrischen Brennstoff/Verbrennungsluft-Gemisch und einem überstöchiometrischen Brennstoff/Verbrennungsluft-Gemisch betrieben wird.

14. Verfahren nach einem der Ansprüche 11-13, **dadurch gekennzeichnet, dass** das Heizgerät (36) wenigstens zeitweise bei beendeter Verbrennung mit einem überstöchiometrischen Brennstoff/Verbrennungsluft-Gemisch betrieben wird.

15. Verfahren nach einem der Ansprüche 11-14, **dadurch gekennzeichnet, dass** das Heizgerät (36) in einem Katalysatoreinheit-Temperierbetrieb wenigstens dann in einem Luftförderbetrieb zum Erzeugen eines das Wärmetauschervolumen durchströmendem Luftstroms betrieben wird, wenn die Temperatur im Bereich der wenigstens einen ersten Katalysatoreinheit (18) über einer zweiten Schwellentemperatur liegt.

16. Antriebssystem für ein Fahrzeug, umfassend eine Brennkraftmaschine (15) und eine dieser zugeordnete Abgasanlage (10) nach einem der Ansprüche 1-10, vorzugsweise betrieben mit einem Verfahren nach einem der Ansprüche 11-15.

## Claims

1. Exhaust system for an internal combustion engine, especially in a vehicle, comprising at least one first catalytic converter unit (18) with at least one catalytic converter arrangement (24) through which internal combustion engine exhaust gas can flow and a fuel-operated heating device (36) with a combustion air feed arrangement (38) for feeding combustion air (L) into a combustion chamber (40), a fuel feed arrangement for feeding fuel (B) into the combustion chamber (40), wherein the at least one first catalytic converter unit (18) comprises an internal combustion engine exhaust gas flow space (22) through which internal combustion engine exhaust gas can flow, wherein the at least one catalytic converter arrangement (24) is arranged in the internal combustion engine exhaust gas flow space (22),
**characterized in that**
the heating device (36) comprises a heat exchanger arrangement (42) through which heating device exhaust gas and heat exchanger medium to be heated can flow, and that the at least one first catalytic converter unit (18) comprises a heat exchanger volume (50) through which heating device exhaust gas leaving the heating device (36) can flow, with a heating device exhaust gas flow space (54) enclosing the internal combustion engine exhaust gas flow space (22) in at least some areas.

2. Exhaust system in accordance with claim 1, **characterized in that** the heating device exhaust gas flow space (54) encloses at least the length area of the internal combustion engine exhaust gas flow space (22), which length area contains the at least one catalytic converter arrangement (24), preferably over its entire circumference.

3. Exhaust system in accordance with one of the preceding claims, **characterized in that** at least one catalytic converter arrangement (24) of the at least one first catalytic converter unit (18) is an oxidation catalytic converter arrangement.

4. Exhaust system in accordance with one of the preceding claims, **characterized in that** the at least one first catalytic converter unit (18) comprises at least one particle filter device (26) which is arranged downstream of at least one catalytic converter arrangement (24) of the same.

5. Exhaust system in accordance with claim 2 and claim 4, **characterized in that** the heating device exhaust gas flow space (54) encloses the length area of the internal combustion engine exhaust gas flow space (22), which length area contains the at least one particle filter device (26), preferably over its entire circumference.

6. Exhaust system in accordance with one of the preceding claims, **characterized in that** at least one second catalytic converter unit (28) is provided in an internal combustion engine exhaust gas flow direction downstream of the at least one first catalytic converter unit (18), preferably wherein the at least one second catalytic converter unit (28) is an SCR catalytic converter unit.

7. Exhaust system in accordance with one of the preceding claims, **characterized in that** at least one muffler unit (32, 34) is provided in an internal combustion engine exhaust gas flow direction downstream of the at least one first catalytic converter unit (18), and that heating device exhaust gas flowing through the heat exchanger volume (50) is introduced into the internal combustion engine exhaust gas stream upstream of at least one muffler unit (34) in the internal combustion engine exhaust gas flow direction.

8. Exhaust system in accordance with claim 7, **characterized in that** a plurality of muffler units (32, 34) following one another in an internal combustion engine exhaust gas flow direction are provided, and that the heating device exhaust gas between a last muffler unit (32, 34) in the internal combustion engine exhaust gas flow direction and a next-to-last muffler unit (32, 34) in the internal combustion engine exhaust gas flow direction is introduced into the internal combustion exhaust gas stream.

9. Exhaust system in accordance with one of the preceding claims, **characterized in that** a heating device exhaust gas catalytic converter arrangement (48), through which heating device exhaust gas can flow, is provided.

10. Exhaust system in accordance with claim 9, **characterized in that** the heating device exhaust gas catalytic converter arrangement (48) is arranged in a heating device exhaust gas flow direction essentially downstream of the heat exchanger arrangement (42).

11. Method for operating an exhaust system (10) in accordance with one of the preceding claims, wherein the heating device (36) is operated in a catalytic converter unit temperature control mode is operated in a combustion operation for generating heating device exhaust gas flowing through the heat exchanger volume at least if the temperature in the area of the at least one first catalytic converter unit (18) is below a first threshold temperature.

12. Method in accordance with claim 11, if referred back to claim 9 or 10, **characterized in that** the heating device (36) is operated at least some times with a hypostoichiometric fuel/combustion air mixture in the combustion operation.

13. Method in accordance with claim 12, **characterized in that** the heating device (36) is alternatingly operated with a hypostoichiometric fuel/combustion air mixture and a hyperstoichiometric fuel/combustion air mixture.

14. Method in accordance with one of the claims 11-13, **characterized in that** the heating device (36) is operated at least some times with a hyperstoichiometric fuel/combustion air mixture after the combustion has ended.

15. Method in accordance with one of the claims 11-14, **characterized in that** the heating device (36) in a catalytic converter unit temperature control mode is operated in an air feed operation for generating an air stream flowing through the heat exchanger volume at least if the temperature in the area of the at least one first catalytic converter unit (18) is above a second threshold temperature.

16. Drive system for a vehicle, comprising an internal combustion engine (15) and an exhaust system (10) in accordance with one of the claims 1-10 associated with the same, preferably operated with a method in accordance with one of the claims 11-15.

## Revendications

1. Système d'échappement pour un moteur à combustion interne, en particulier dans un véhicule, comprenant au moins une première unité de catalyseur (18) avec au moins un arrangement de catalyseur (24) pouvant être traversé par les gaz d'échappement du moteur à combustion interne et un appareil de chauffage (36) fonctionnant au carburant avec un arrangement d'alimentation en air de combustion (38) pour l'alimentation en air de combustion (L) dans une chambre de combustion (40), un arrangement d'alimentation en carburant pour l'alimentation en carburant (B) dans la chambre de combustion (40), dans lequel ladite au moins une première unité de catalyseur (18) comprend une chambre d'écoulement des gaz d'échappement du moteur à combustion interne (22) pouvant être traversée par les gaz d'échappement du moteur à combustion interne, dans lequel ladite au moins une unité de catalyseur (24) est disposée dans la chambre d'écoulement des gaz d'échappement du moteur à combustion interne (22),
**caractérisé en ce que**
l'appareil de chauffage (36) comprend un arrangement d'échangeur de chaleur (42) à travers lequel peuvent circuler les gaz d'échappement d'appareil de chauffage et le fluide de l'échangeur de chaleur à chauffer, et
que ladite au moins une première unité de catalyseur (18) comprend un volume d'échangeur de chaleur (50) à travers lequel les gaz d'échappement d'appareil de chauffage quittant l'appareil de chauffage (36) peuvent s'écouler, avec un espace d'écoulement des gaz d'échappement d'appareil de chauffage (54) entourant l'espace d'écoulement des gaz d'échappement du moteur à combustion interne (22) dans au moins certaines zones.

2. Système d'échappement selon la revendication 1, **caractérisé en ce que** la chambre d'écoulement des gaz d'échappement d'appareil de chauffage (54) entoure au moins la zone longitudinale de la chambre d'écoulement des gaz d'échappement du moteur à combustion interne (22), laquelle zone longitudinale contient ledit au moins un arrangement de catalyseur (24), de préférence sur toute sa circonférence.

3. Système d'échappement selon l'une des revendications précédentes, **caractérisé en ce qu'**au moins un arrangement de catalyseur (24) de ladite au moins une première unité de catalyseur (18) est un arrangement de catalyseur d'oxydation.

4. Système d'échappement selon l'une des revendications précédentes, **caractérisé en ce que** ladite au moins une première unité de catalyseur (18) comprend au moins un arrangement de filtre à particules (26) qui est disposé en aval d'au moins un arrangement de catalyseur (24) de celle-ci.

5. Système d'échappement selon la revendication 2 et la revendication 4, **caractérisé en ce que** la chambre d'écoulement des gaz d'échappement d'appareil de chauffage (54) entoure la zone longitudinale de la chambre d'écoulement des gaz d'échappement du moteur à combustion interne (22), laquelle zone longitudinale contient ledit au moins un arrangement de filtre à particules (26), de préférence sur toute sa circonférence.

6. Système d'échappement selon l'une des revendications précédentes, **caractérisé en ce qu'**il est prévu, dans le sens d'écoulement des gaz d'échappement d'un moteur à combustion interne en aval de ladite au moins une première unité de catalyseur (18), au moins une deuxième unité de catalyseur (28), de préférence dans lequel ladite au moins une deuxième unité de catalyseur (28) est de préférence une unité de catalyseur SCR.

7. Système d'échappement selon l'une des revendications précédentes, **caractérisé en ce qu'**il est prévu dans le sens d'écoulement des gaz d'échappement de moteur à combustion interne en aval de ladite au moins une première unité de catalyseur (18) au moins une unité de silencieux (32, 34), et **en ce que** les gaz d'échappement d'appareil de chauffage traversant le volume d'échangeur de chaleur (50) sont introduits dans le flux de gaz d'échappement de moteur à combustion interne en amont d'au moins une unité de silencieux (34) dans le sens d'écoulement des gaz d'échappement de moteur à combustion interne.

8. Système d'échappement selon la revendication 7, **caractérisé en ce qu'**il est prévu plusieurs unités de silencieux (32, 34) se succédant dans le sens d'écoulement des gaz d'échappement d'un moteur à combustion interne et **en ce que** les gaz d'échappement d'appareil de chauffage sont introduits dans le flux de gaz d'échappement du moteur à combustion interne entre une dernière unité de silencieux (32, 34) dans le sens d'écoulement des gaz d'échappement du moteur à combustion interne et l'avant-dernière unité de silencieux (32, 34) dans le sens d'écoulement des gaz d'échappement du moteur à combustion interne.

9. Système d'échappement selon l'une des revendications précédentes, **caractérisé en ce qu'**il est prévu un arrangement de catalyseur de gaz d'échappement d'appareil de chauffage (48), à travers lequel les gaz d'échappement d'appareil de chauffage peuvent s'écouler.

10. Système d'échappement selon la revendication 9, **caractérisé en ce que** l'arrangement de catalyseur de gaz d'échappement d'appareil de chauffage (48) est disposé dans un sens d'écoulement des gaz d'échappement d'appareil de chauffage essentiellement en aval de l'arrangement d'échangeur de chaleur (42).

11. Procédé de fonctionnement d'un système de gaz d'échappement (10) selon l'une des revendications précédentes, dans lequel l'appareil de chauffage (36) dans un mode de régulation de température de l'unité de catalyseur est opéré dans un mode de combustion pour la production de gaz d'échappement d'appareil de chauffage s'écoulant à travers le volume de l'échangeur de chaleur au moins lorsque la température dans la zone de ladite au moins une première unité de catalyseur (18) est inférieure à une première température de seuil.

12. Procédé selon la revendication 11, s'il est renvoyé à la revendication 9 ou 10, **caractérisé en ce que** l'appareil de chauffage (36) fonctionne dans le mode de combustion au moins temporairement avec un mélange combustible/air de combustion hypostoechiométrique.

13. Procédé selon la revendication 12, **caractérisé en ce que** l'appareil de chauffage (36) fonctionne de manière alternante avec un mélange combustible/air de combustion hypostoechiométrique et un mélange combustible/air de combustion hyperstoechiométrique.

14. Procédé selon l'une des revendications 11 à 13, **caractérisé en ce que** l'appareil de chauffage (36) est opéré au moins temporairement après la fin de la combustion avec un mélange combustible/air de combustion hyperstoechiométrique.

15. Procédé selon l'une des revendications 11-14, **caractérisé en ce que** l'appareil de chauffage (36) dans un mode de régulation de température de l'unité de catalyseur est opéré dans un mode d'alimentation en air pour générer un courant d'air traversant le volume de l'échangeur de chaleur, au moins lorsque la température dans la zone de ladite au moins une première unité de catalyseur (18) est supérieure à une deuxième température de seuil.

16. Système d'entraînement pour un véhicule, comprenant un moteur à combustion interne (15) et un système d'échappement (10) selon l'une des revendications 1 à 10 associées à celui-ci, fonctionnant de préférence avec un procédé selon l'une des revendications 11 à 15.
